# EUROPÄISCHE PATENTSCHRIFT

(11) **EP 0 595 947 B1**
(45) Veröffentlichungstag und Bekanntmachung des Hinweises auf die Patenterteilung: **04.10.1995**
(21) Anmeldenummer: 92916050.5
(22) Anmeldetag: 22.07.1992
(51) Int. Cl.: B62D 25/18

(54) **SPRITZSCHUTZVORRICHTUNG FÜR FAHRZEUGE**
MUD FLAP FOR VEHICLES
BAVETTE GARDE-BOUE POUR VEHICULES

(30) Priorität: 22.07.1991 DE 4124260
(43) Veröffentlichungstag der Anmeldung: 11.05.1994
(73) Patentinhaber: EN-TOUT-CAS INTELLECTUAL PROPERTY B.V., St. Albans, Hertfordshire AL1 5E13 (GB)
(72) Erfinder: BAUER, Ulrich, D-3360 Osterode-Lerbach (DE); GRAHLMANN, Jürgen, D-3000 Hannover 71 (DE)
(74) Vertreter: Hoeger, Stellrecht & Partner
(86) Internationale Anmeldenummer: EP9201668
(87) Internationale Veröffentlichungsnummer: WO9301963

(56) Entgegenhaltungen:
- EP-A- 0 425 852
- FR-A- 2 618 118
- GB-A- 2 132 148
- US-A- 3 899 192
- US-A- 4 598 000

## Beschreibung

Die Erfindung betrifft eine Spritzschutzvorrichtung für Kraftfahrzeuge oder Kraftfahrzeuganhänger zur Verminderung des hinter einem fahrenden Fahrzeug auftretenden, von den auf nasser Fahrbahn abrollenden Rädern erzeugten Gischts, welche die Gestalt eines flachen Gebildes mit einer dem betreffenden Fahrzeugrad zugewandten ersten und einer von diesem Rad abgekehrten zweiten Seite besitzt, wobei die erste Seite von einer Wasserdurchtrittsöffnungen aufweisenden Einlaßschicht gebildet ist, an deren von der ersten Seite abgewandten Rückseite mindestens ein Distanzhalter zur Schaffung eines Hohlraums aus miteinander kommunizierenden Öffnungen zwischen der Einlaßschicht und einem Träger für den Distanzhalter und die Einlaßschicht vorgesehen ist.

Insbesondere betrifft die Erfindung einen Wasserabsorber gemäß der Richtlinie 91/226/EWG des Rats der Europäischen Gemeinschaften vom 27.03.1991.

Eine solche Spritzschutzvorrichtung kann Teil der Radabdeckung und/oder des Schmutzfängers und/oder der sich an die Radabdeckung seitlich anschließenden Schürze sein, es ist aber auch möglich, eine solche Spritzschutzvorrichtung an der Radabdeckung und/oder dem Schmutzfänger und/oder der Schürze zu befestigen. Unter der Radabdeckung ist üblicherweise ein Kotflügel zu verstehen, unter dem Schmutzfänger ein hinter dem betreffenden Rad am unteren Teil des Fahrgestells oder einer Ladefläche oder an der Radabdeckung angebrachtes Bauteil, welches sich in Richtung auf die Fahrbahnoberfläche erstreckt.

Wenn eingangs festgestellt wurde, daß eine gattungsgemäße Spritzschutzvorrichtung die Gestalt eines flachen Gebildes aufweist, so soll hierunter verstanden werden, daß die Abmessungen der Fläche der Spritzschutzvorrichtung groß gegenüber ihrer Dicke sind.

Zwei bekannte derartige Spritzschutzvorrichtungen sollen nachstehend kurz beschrieben werden. Eine erste bekannte Spritzschutzvorrichtung (EP-A-0 425 852) umfaßt ein starres plattenförmiges rückwärtiges Bauteil mit im Querschnitt L-förmigen, sich in Richtung auf das Fahrzeugrad nach vorn erstreckenden, vertikal verlaufenden Seitenbereichen - das rückwärtige Bauteil weist also im Querschnitt U-förmige Gestalt mit nach innen abgewinkelten Schenkeln auf - sowie ein starres, die Einlaßschicht bildendes vorderes Bauteil, das von den L-förmigen Seitenbereichen des rückwärtigen Bauteils gehalten ist, wodurch ein Hohlraum zwischen vorderem und rückwärtigem Bauteil erzeugt wird. Das vordere Bauteil ist durch zwei oder mehrere in vertikaler Richtung verlaufende, im Querschnitt insbesondere dreieckförmige Leisten oder Streben und durch mit diesen verbundene, in horizontaler Richtung verlaufende, insbesondere wie die ersteren ausgebildete Leisten oder Streben gebildet. An dem rückwärtigen Bauteil sind Rippen zu Drainagezwecken angeformt sowie zahlreiche stiftartige Vorsprünge, die sich wie die Rippen in den Hohlraum hinein erstrecken, und die der Aufnahme der kinetischen Energie des durch das vordere Bauteil in die Spritzschutzvorrichtung eindringenden Wassers dienen. Die genannte Offenlegungsschrift befaßt sich mit der Dimensionierung und der Anordnung der Vorsprünge und der Rippen an dem rückwärtigen Bauteil, also mit dem Problem der Ableitung des in den Hohlraum gelangten Wassers, sowie mit der Gestaltung des durch Stege gebildeten vorderen Bauteils und mit dem Problem der Befestigung dieses vorderen Bauteils an dem rückwärtigen Bauteil.

Eine aus der GB-2 132 148-A bekannte Spritzschutzvorrichtung der eingangs beschriebenen Art umfaßt eine Einlaßschicht, die entsprechend dem vorderen Bauteil der vorstehend beschriebenen Spritzschutzvorrichtung ausgebildet ist, sowie eine Energie absorbierende Schicht und eine Abstandshalterschicht. Die Energie absorbierende Schicht wird durch zwei Sätze parallel verlaufender länglicher Elemente gebildet, die sich jeweils in einem bestimmten Winkel überkreuzen, und die Abstandshalterschicht ist durch ein als Ganzes extrudiertes rautenförmiges Gitter gebildet, das entweder die Einlaßschicht und die Energie absorbierende Schicht voneinander beabstandet oder die zuletzt genannten Schichten in einem Abstand von einem rückwärtigen Bauteil hält, wie z. B. einem Spritzlappen, das seinerseits die Spritzschutzvorrichtung hält.

Zumindest bei der an erster Stelle behandelten bekannten Spritzschutzvorrichtung handelt es sich um ein fertig konfektioniertes Bauteil, was den Nachteil mit sich bringt, daß wegen der Typenvielfalt der Fahrzeuge eine außerordentlich große Zahl unterschiedlichster Spritzschutzvorrichtungen gefertigt und auf Lager gehalten werden muß. Sofern die zweite bekannte Spritzschutzvorrichtung überhaupt so biegbar ausgebildet ist, daß damit beispielsweise ein Kotflügel mit verhältnismäßig geringem Krümmungsradius ausgestattet werden kann, so erweist sich die Montage der verschiedenen Schichten als aufwendig und schwierig, da deren Eigenelastizität oder Eigensteifigkeit der Anpassung an die Krümmung des Kotflügels entgegenwirkt. Diese Spritzschutzvorrichtung ist, wie auch die an erster Stelle diskutierte, insbesondere aufgrund der filigranen Struktur der Einlaßschicht anfällig für Beschädigungen, etwa durch gegen die Spritzschutzvorrichtung geschleuderte Steine. Auch die Randbereiche der Einlaßschicht, die durch Endabschnitte der parallelen Stege gebildet sind, stellen Schwachstellen dieser bekannten Spritzschutzvorrichtung dar.

Beide bekannte Spritzschutzvorrichtungen sind in ihrem Aufbau so kompliziert und aufwendig, daß eine kostengünstige Herstellung, insbesondere für verschiedene Fahrzeugtypen, nicht realisierbar ist.

Der Erfindung lag die Aufgabe zugrunde, eine Spritzschutzvorrichtung der in Rede stehenden Art anzugeben, bei der die vorstehend beschriebenen Probleme bekannter Spritzschutzvorrichtungen nicht auftreten und die unter vertretbaren Kosten herstellbar ist.

Ausgehend von einer Spritzschutzvorrichtung der eingangs erwähnten Art läßt sich diese Aufgabe erfindungsgemäß dadurch lösen, daß die Einlaßschicht von einer als Schmutzfilter- und Wassertröpfchen abbremsenden Schicht gestalteten, in beliebiger Richtung flexiblen textilen Materialbahn gebildet ist, welche ein Gewebe, Gewirke, Gestrick oder Vlies aufweist.

Unter einer solchen textilen Materialbahn soll eine Bahn eines jeglichen Gewebes, Gewirkes, Gestrickes oder Vlieses (auch Nadelvlies) aus einem beliebigen textilen Material, aus Metalldraht oder aus Kunststoffmaterial verstanden werden.

Unter der Eigenschaft "in beliebiger Richtung flexibel" soll verstanden werden, daß die die Einlaßschicht bildende textile Materialbahn bezüglich jeder in der Ebene der Bahn liegenden Geraden auslenkbar ist, sich also insbesondere im wesentlichen widerstandslos an eine beliebige Oberflächenstruktur anpassen läßt.

Da es sich bei dem Träger um ein von der eigentlichen Spritzschutzvorrichtung getrenntes Teil handeln kann, z. B. die Radabdeckung (Kotflügel) oder den Schmutzfänger, ist die erfindungsgemäß ausgebildete Spritzschutzvorrichtung frei konfektionierbar und an einen beliebigen Fahrzeugtyp anpaßbar, wobei der an späterer Stelle zu beschreibende Distanzhalter die Flexibilität der textilen Materialbahn nicht wesentlich beeinträchtigen soll. In diesem Fall ist die zweite Seite der Spritzschutzvorrichtung durch die Rückseite der Materialbahn und/oder den Distanzhalter gebildet.

Sofern es sich um Ausführungsformen der erfindungsgemäßen Spritzschutzvorrichtung handelt, bei denen der Träger Bestandteil der Spritzschutzvorrichtung ist, z. B. ein insbesondere wasserundurchlässiges Kunststoff-Flachmaterial, empfiehlt es sich, den Träger zumindest so hinreichend flexibel zu gestalten, daß er sich demjenigen Fahrzeugteil problemlos anpassen läßt, an dem er montiert werden soll. Auch im letzteren Fall erweist es sich als vorteilhaft, den Träger so zu wählen oder auszugestalten, daß die Spritzschutzvorrichtung frei konfektionierbar ist.

Die Wirkung einer erfindungsgemäßen Spritzschutzvorrichtung wird weiter erhöht, wenn die Materialbahn nach vorn abstehende längliche Vorsprünge aufweist. Hierdurch wird dem gegen die Spritzschutzvorrichtung geschleuderten Wasser Energie entzogen und Gischt erzeugende Reflexion nahezu vollständig vermieden. Zwar ist aus der US-PS 3 899 192 und aus der US-PS 4 598 000 eine gattungsfremde, laminierte Spritzschutzvorrichtung bekannt, die eine mit länglichen Vorsprüngen versehene dreidimensionale thermoplastische Schicht umfaßt, die auf eine wasserundurchlässige rückwärtige Schicht aufgebracht und dort befestigt ist. Da den vorstehenden Patentschriften nicht der geringste Hinweis auf einen Hohlraum zwischen einem Träger und einer Einlaßschicht oder auf eine Wasserdurchlässigkeit der vorderen Kunststoffschicht zu entnehmen ist und die nicht-textile dreidimensionale vordere Schicht mit den Vorsprüngen außerdem auf alle Fälle dann, wenn sie auf die Trägerschicht aufgebracht ist, wasserundurchlässig und somit als Einlaßschicht der erfindungsgemäßen Vorrichtung nicht verwendbar wäre, konnten die beiden Druckschriften die erfindungsgemäße Ausgestaltung der Materialbahn mit Vorsprüngen nicht nahegelegt haben.

Die länglichen Vorsprünge können aus einem beliebigen Material bestehen, insbesondere aus einer angespritzten oder in sonstiger Weise auf die Materialbahn aufgebrachten thermoplastischen Kunststoffmasse, es sind jedoch auch durch Drahtborsten gebildete Vorsprünge denkbar. Bevorzugt werden aber aus textilen Materialien, wie Kunststoffasern und/oder Kunststoffbändchen, bestehende Vorsprünge.

Um eine möglichst wirksame Aufnahme des gegen die Spritzschutzvorrichtung geschleuderten und insbesondere stark verunreinigten flüssigen Mediums zu gewährleisten, wird als mit Vorsprüngen versehene Materialbahn eine Polware bevorzugt. Die Polware kann hierbei eine Tufting-Ware sein, bei der die den Pol bildenden U-förmigen Tufts in einem Gestrick, Gewebe oder Vlies als Trägerschicht gehalten sind. Der Pol kann auch durch eine textile Bindung in der eigentlichen Materialbahn verankert sein; in diesem Fall ist die Materialbahn insbesondere durch ein Grundgestrick mit sich aus der Ebene des Gestricks erhebenden Schlaufen gebildet, welchletztere zur Bildung von ein freies Ende aufweisenden Vorsprüngen parallel zur Ebene des Grundgestricks abgeschnitten oder aufgetrennt werden können. Als besonders vorteilhaft hat es sich erwiesen, die Materialbahn samt Pol aus einer Raschelware zu bilden. Zur Bildung einer Polware braucht eine als zweiflächige Raschelware hergestellte Raschelware dann lediglich zwischen ihren beiden Flachmaterialbahnen in an sich bekannter Weise aufgetrennt zu werden. Unter der Voraussetzung hinreichender Wasserdurchlässigkeit der Raschelware kann diese auch im ungetrennten Zustand als Einlaßschicht der erfindungsgemäßen Spritzschutzvorrichtung dienen. Sind die die beiden Flachmaterialbahnen einer zweiflächigen Raschelware verbindenden Fäden oder Drähte hinreichend steif, können diese sogar die Distanzhalter und die eine Flachmaterialbahn den Träger bilden.

Wie sich aus den vorstehenden Ausführungen ergibt, kann die die Einlaßschicht bildende Materialbahn bevorzugt eine an sich bekannte Kunstrasenbahn sein, die hierfür jedoch eine hinreichende Wasserdurchlässigkeit aufweisen muß.

Für die Ausgestaltung des oder der Distanzhalter ist von entscheidender Bedeutung, daß die durch die Materialbahn hindurchgetretene Wassermenge ausreichend schnell innerhalb des durch den oder die Distanzhalter geschaffenen Hohlraums abgeführt werden kann. Insbesondere diesbezüglich erweist es sich als vorteilhaft, wenn die Materialbahn nach hinten abstehende und Distanzhalter bildende Vorsprünge, z. B. in Form von Distanzbolzen oder -nieten und dergleichen mehr, die an der Materialbahn befestigt sind, aufweist. Es sind aber auch an die Rückseite der Materialbahn angeformte Vorsprünge denkbar, die angespritzt oder mittels geeigneter Vorrichtungen, etwa mit Ausnehmungen versehene Walzen, in Form einer aushärtbaren Masse auf die Rückseite der Materialbahn aufgebracht sein können.

Bevorzugte Ausführungsformen der erfindungsgemäßen Spritzschutzvorrichtung haben einen Sandwich-Aufbau, vor allem dann, wenn der Träger Bestandteil der Spritzschutzvorrichtung ist oder nachdem die letztere an einem zu dem betreffenden Kraftfahrzeug gehörigen Träger, wie z. B. dem Kotflügel oder dem Schmutzfänger, angebracht wurde. Im ersten Fall ist die Spritzschutzvorrichtung bevorzugt so ausgestaltet, daß sie eine zweite, den Träger bildende Materialbahn aufweist, welche ebenso wie die die Einlaßschicht bildende erste Materialbahn flexibel ausgebildet und mit dieser so verbunden ist, daß die beiden Materialbahnen und der Distanzhalter eine flaches flexibles Sandwich-Gebilde bilden. Eine solche Spritzschutzvorrichtung läßt sich aufgrund ihrer Flexibilität einer beliebigen Form einer Kotflügelinnenseite anpassen; sie läßt sich weiterhin sehr kostengünstig konfektionieren, etwa von einer als Meterware vorliegenden Sandwich-Bahn, indem die einzelnen Sandwichschichten der Spritzschutzvorrichtung durch einen einzigen Schneidvorgang auf die gewünschte Abmessung zugeschnitten werden können, und nicht für jede einzelne Schicht ein separater Konfektionierungsvorgang erforderlich ist. Damit wird auch das bei separater Konfektionierung von Einlaßschicht, Distanzhaltermaterial und Träger häufig auftretende Problem, daß die resultierenden Abmessungen voneinander abweichen und zeitaufwendige Nacharbeiten vorgenommen werden müssen, sicher vermieden.

Die Verbindung der verschiedenen Elemente der Spritzschutzvorrichtung oder insbesondere des Sandwich-Aufbaus (Einlaßschicht, Distanzhaltermaterial und Träger) kann in Abhängigkeit von den verwendeten Materialien durch alle bekannte Fügeverfahren, wie Schweißen, Kleben, Verbinden mittels mechanischer Verbindungselemente, Nähen oder dergleichen, sowohl mit als auch ohne zusätzliche Hilfsstoffe erfolgen.

Eine besonders kostengünstig herstellbare Ausführungsform der erfindungsgemäßen Spritzschutzvorrichtung mit Sandwich-Aufbau stellt ein zweiflächiges Gewirke dar; hierunter werden zwei Flachmaterialbahnen verstanden, die durch Fäden, Garne, Drähte oder Bändchen, welche in die Bahnen eingebunden sind, miteinander verbunden sind; die vorzugsweise aus Kunststoffmaterial bestehenden Fäden, Garne, Drähte oder Bändchen weisen für die in Rede stehende Anwendung eine solche Eigensteifigkeit auf, daß zwischen den beiden Flachmaterialbahnen ein Hohlraum gebildet wird, in dem das durch die als Einlaßschicht dienende Flachmaterialbahn eingetretene Wasser abfließen kann. Eine derart beschaffene Spritzschutzvorrichtung zeichnet sich durch gute Wasserabsorption, hohe Flexibilität und gutes Langzeitverhalten aus, insbesondere wenn witterungsbeständige Kunststoffmaterialien verwendet werden. Von der strukturierten Oberfläche der gewirkten ersten Materialbahn wird die kinetische Energie des auf sie auftreffenden Wassers aufgenommen. Das durch die erste Materialbahn hindurchtretende Wasser kann zwischen den durch die steifen Fäden, Garne etc. gebildeten Verbindungsstege nach unten und/oder nach den Seiten abfließen.

Wie oben bereits ausgeführt, sind bei den voranstehend beschriebenen erfindungsgemäßen Spritzschutzvorrichtungen als Distanzhalter Distanzbolzen oder -nieten oder dergleichen verwendbar; der Distanzhalter kann aber auch von einer flexiblen, mit Öffnungen versehenen Schicht gebildet sein, wobei die Öffnungen miteinander kommunizieren, so daß das durch die erste Materialbahn eindringende Wasser durch die Schicht hindurch und/oder in der Schicht ableitbar ist. Die Vorteile einer solchen Distanzhalterschicht sind insbesondere darin zu sehen, daß die erste Materialbahn über ihre gesamte Fläche, und nicht nur punktuell, wie z. B. im Falle der Distanzbolzen, in einem Abstand zu dem Träger gehalten und abgestützt wird. Wenn die erste Materialbahn und die Distanzhalterschicht nicht nur punktuell miteinander verbunden sind, wird die Gefahr einer stellenweisen und sich ausbreitenden Loslösung der ersten Materialbahn wirksam vermieden.

Der Begriff "Öffnung" in der Distanzhalterschicht ist hier nicht so zu verstehen, daß ein beide Seiten der Distanzhalterschicht verbindender Kanal vorhanden sein muß, und falls eine solche kanalförmige Öffnung vorhanden ist, so muß sie nicht notwendigerweise bei Draufsicht auf die Distanzhalterschicht eine Durchtrittsöffnung bilden, sondern es ist lediglich darauf abzustellen, daß in der Distanzhalterschicht ineinander übergehende Hohlräume vorgesehen sind, die zumindest zum Teil an die erste Materialbahn angrenzen und die zumindest so groß ausgebildet sein müssen, daß sie nicht von durch die erste Materialbahn hindurchgetretene Verunreinigungen verstopft werden und daß das durch die erste Materialbahn eindringende Wasser durch die Hohlräume hindurch ableitbar ist.

Bei einer ganz besonders vorteilhaften Ausführungsform der Spritzschutzvorrichtung ist die Distanzhalterschicht von einem Wirrdrahtgelege gebildet, wie es von der Firma AKZO bezogen werden kann. Ein solches Wirrdrahtgelege ist eine Schicht unregelmäßig über- und untereinander verlaufender Drähte, die miteinander verbunden sind und aus Metall oder aus Kunststoff bestehen können. Eine solche Schicht zeichnet sich durch hohe Wasserdurchlässigkeit und gute Flexibilität aus und ist nahezu unempfindlich gegen jegliche Art von mechanischer Einwirkung. Ebenso hervorzuheben ist das ideale Reinigungsverhalten eines solchen Wirrdrahtgeleges.

Bei einer weiteren Ausführungsform der erfindungsgemäßen Spritzschutzvorrichtung umfaßt die Distanzhalterschicht eine erste Lage in Form eines im wesentlichen ebenen Drahtgitters und eine zweite Lage in Form eines zweiten, eine dreidimensionale Hügelstruktur bildenden Drahtgitters. Vorzugsweise liegt die erste Lage der Distanzhalterschicht an der ersten Materialbahn an und die zweite Lage an dem Träger, wodurch eine flächige Verbindung mit der ersten Lage möglich ist und zugleich die Vorteile einer Hügelstruktur ausgenutzt werden können, nämlich eine noch bessere Flexibilität und Anpaßbarkeit an die jeweilige Kotflügelform, sowie die nahezu sichere Ausschließung von Verstopfungen innerhalb der Distanzhalterschicht aufgrund der durch die Hügelstruktur geschaffenen großen Hohlräume zwischen der ersten Materialbahn und dem Träger.

Die beiden Lagen können in beliebiger Weise, insbesondere durch Nähte, miteinander verbunden sein, aus Gründen der Dauerhaftigkeit wird jedoch empfohlen, die beiden Lagen miteinander zu verschweißen.

Zur Schaffung einer besonders stabilen Spritzschutzvorrichtung, wie sie beispielsweise bei Fahrzeugen wünschenswert ist, die extremen mechanischen Belastungen durch schweren Schmutz ausgesetzt sind, wie z. B. Baustellenfahrzeuge, hat es sich gezeigt, daß wenn zumindest eine der beiden Lagen durch zwei aneinanderliegende Drahtgitter gebildet ist, eine wesentliche Stabilitätssteigerung erreicht wird.

Eine gute Flächenstabilität sowie ein ausgezeichnetes Langzeitverhalten unter Erhaltung der Flexibilität sowie eines sehr hohen Wasseraufnahmevermögens werden mit einer Spritzschutzvorrichtung erreicht, deren Distanzhalterschicht von einer, insbesondere imprägnierten und gewirkten oder gewebten Materialbahn gebildet ist, die entsprechend einer dreidimensionalen Hügelstruktur verformt ist und etwa die Oberflächengestalt einer Hälfte eines handelsüblichen Eierkartons (gegebenenfalls verkleinert) aufweist. Die vorstehend beschriebene Distanzhalterschicht kann an ihren Erhebungen oder im Bereich ihrer Täler mit der die Einlaßschicht bildenden Materialbahn verbunden sein, wobei im ersten Fall das durch die erste Materialbahn eindringende, gegebenenfalls feste Schmutzpartikel enthaltende Wasser, ohne durch die Kunststoffbahn hindurchtreten zu müssen, zwischen der ersten Materialbahn und der Kunststoffbahn, also zwischen den Hügeln hindurch, abfließen kann.

Weist eine erfindungsgemäße Spritzschutzvorrichtung einen Sandwich-Aufbau mit zu der Spritzschutzvorrichtung gehörigem Träger auf, so erweist es sich insbesondere hinsichtlich der Stabilität als vorteilhaft, wenn die zweite, den Träger bildende Materialbahn eine flexible Kunststoffplatte ist, die mittels geeigneter Befestigungselemente, wie Schrauben, Bolzen, Stiften mit federnden Sicherungselementen oder dergleichen, am Kotflügel eines Kraftfahrzeugs befestigbar ist.

Bei der vorstehenden Ausführungsform der erfindungsgemäßen Spritzschutzvorrichtung ist es dann möglich, den oder die Distanzhalter statt an der Materialbahn an dem Träger zu befestigen, was sich insbesondere bei Beschädigung der Materialbahn als besonders vorteilhaft auszeichnet, da in diesem Fall diese Materialbahn gelöst und durch eine neue Materialbahn ersetzt werden kann, ohne daß die verhältnismäßig geschützt angeordneten und daher weitaus weniger gefährdeten Distanzhalter gleichfalls ersetzt werden müßten.

Auch in diesem Fall erweist es sich als vorteilhaft, wenn der Träger nach vorn abstehende und Distanzhalter bildende Vorsprünge aufweist, die ebenso wie an die Rückseite der ersten Materialbahn an die Vorderseite des Trägers angeformt, insbesondere angespritzt, sein können.

In Weiterbildung der Erfindung kann die in Rede stehende Ausführungsform der Spritzschutzvorrichtung dahingehend verbessert werden, daß zumindest ein Teil der Vorsprünge zugleich als Befestigungselemente für die die Einlaßschicht bildende Materialbahn dient. Dieser Teil der Vorsprünge ist dann vorzugsweise stiftartig und länger ausgebildet als die übrigen, lediglich Distanzhalter bildenden Vorsprünge und ist durch die erste Materialbahn durchsteckbar; um gleichzeitig Distanzhalterfunktion übernehmen zu können, weist dieser Teil der Vorsprünge vorzugsweise einen Anschlag für die die Einlaßschicht bildende Materialbahn auf.

Es hat sich gezeigt, daß es für die geforderte Gischtabsorption ausreichend ist, wenn der Distanzhalter - in Richtung senkrecht zu der die erste Seite bildenden Materialbahn gemessen - eine Höhe von mindestens 5 mm hat, vorzugsweise eine Höhe von mindestens 6 mm, und bevorzugt werden Ausführungsformen, bei denen der Distanzhalter eine Höhe von ca. 8 mm hat. Als sinnvolle Obergrenze für die Distanzhalterhöhe werden ca. 20 mm vorgeschlagen, weil eine noch größere Abmessung nicht mehr zu einer nennenswerten Verbesserung der Gischtabsorption führt, aber Schwierigkeiten bei der Unterbringung der Spritzschutzvorrichtung zur Folge hat.

Für die gewünschte Wasserdurchlässigkeit der die erste Seite bildenden Materialbahn ist es ausreichend, wenn diese eine freie Durchgangsfläche von ca. 5 % - ca. 8 % aufweist, die freie Durchgangsfläche sollte mindestens ca. 5 % betragen (die Summe der Flächen der Wasserdurchtrittsöffnungen sollte also mindestens ca. 5 % der Gesamtfläche der Materialbahn betragen).

Weitere Merkmale, Vorteile und Einzelheiten der Erfindung ergeben sich aus der nachfolgenden Beschreibung sowie der zeichnerischen Darstellung einiger besonders bevorzugter Ausführungsformen der erfindungsgemäßen Spritzschutzvorrichtung; in der Zeichnung zeigen:
- Fig. 1: eine Ansicht einer ersten Ausführungsform der erfindungsgemäßen Spritzschutzvorrichtung mit einer Polware und einer nur teilweise dargestellten Abstandshalterschicht;
- Fig. 2: eine Schnittansicht einer zweiten Ausführungsform der erfindungsgemäßen Spritzschutzvorrichtung mit einem Träger;
- Fig. 3: eine Draufsicht auf den Träger der Spritzschutzvorrichtung nach Fig. 2;
- Fig. 4: eine Ansicht einer weiteren Ausführungsform der erfindungsgemäßen Spritzschutzvorrichtung mit einem Vlies und einer Vielzahl von Distanzhaltern;
- Fig. 5: eine Ansicht einer vierten Ausführungsform der erfindungsgemäßen Spritzschutzvorrichtung mit einer Polware und einer aus mehreren Gittern bestehenden Abstandshalterschicht;
- Fig. 6: eine Ansicht einer aus einem zweiflächigen Gewirke bestehenden fünften Ausführungsform der erfindungsgemäßen Spritzschutzvorrichtung;
- Fig. 7: eine Ansicht einer sechsten Ausführungsform der erfindungsgemäßen Spritzschutzvorrichtung mit einer Polware und einer aus einem Kunststoffgewirke geformten, nur teilweise dargestellten Distanzhalterschicht und
- Fig. 8: eine letzte Ausführungsform der erfindungsgemäßen Spritzschutzvorrichtung mit einem Vlies und einer aus einem Kunststoffgewirke geformten Abstandshalterschicht.

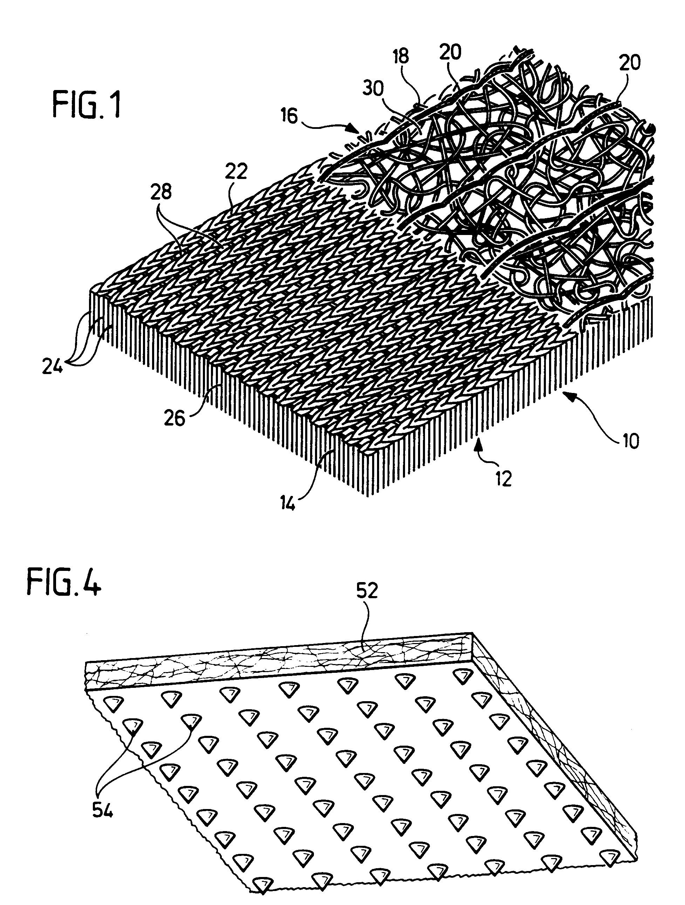

Die in der Fig. 1 dargestellte erste Ausführungsform der erfindungsgemäßen Spritzschutzvorrichtung umfaßt eine von einer Polware 10 gebildete und eine erste Seite 12 der Spritzschutzvorrichtung darstellende Einlaßschicht 14 sowie eine Distanzhalterschicht 16 in Form eines Wirrdrahtgeleges 18, das mittels parallel verlaufender Nähte 20 an der von der ersten Seite 12 abgewandten Seite 22 der Polware 10 befestigt ist.

Im montierten Zustand liegt die Distanzhalterschicht 16 beispielsweise gegen die dem Fahrzeugrad zugewandte Seite eines Kotflügels an und ist mit beliebigen Befestigungsmitteln dort befestigt. Grobe Bestandteile, wie kleine Steine, Laub, Aststücke und dergleichen, die von den Kraftfahrzeugrädern gegen die Einlaßschicht 14 der Spritzschutzvorrichtung geschleudert werden oder von dem hiergegen geschleuderten Wasser mitgerissen werden, werden von der Polware 10 zurückgehalten und fallen entweder auf die Straße zurück, oder sie bleiben in dem durch Kunststoffbändchen 24 gebildeten Pol 26 der Einlaßschicht 14 hängen und können bei der normalen Autowäsche mit einem Wasserstrahl entfernt werden. Kleinere Schwebebestandteile im auftreffenden Wasser werden gegebenenfalls durch Wasserdurchtrittsöffnungen 28 in der Polware 10 hindurchgespült und fließen mit dem Wasser innerhalb des durch das Wirrdrahtgelege 18 zwischen Kotflügel und Polware 10 gebildeten Hohlraums 30 ab.

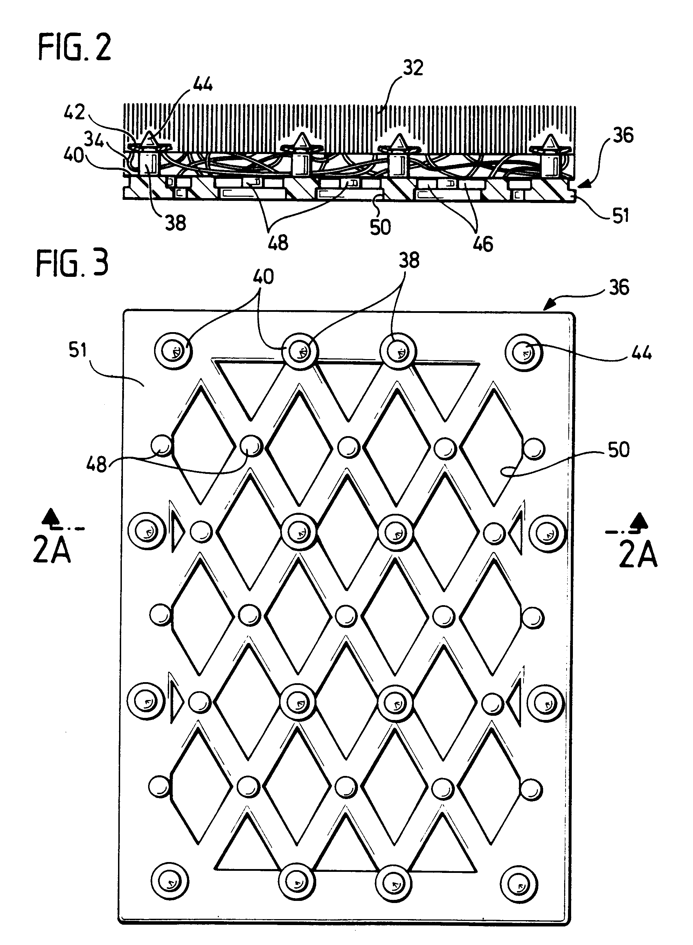

Eine in der Fig. 2 dargestellte Ausführungsform der erfindungsgemäßen Spritzschutzvorrichtung umfaßt wiederum eine Kunstrasenbahn 32, die auf einer Schicht eines Wirrdrahtgeleges 34 befestigt ist, sowie einen plattenförmigen Träger 36 mit stiftförmigen, nach vorn abstehenden Vorsprüngen 38, die sich durch das Wirrdrahtgelege 34 und durch die Kunstrasenbahn 32 hindurch erstrecken und diese dadurch halten. Die Vorsprünge 38 weisen jedoch einen vom Träger 36 beabstandeten Anschlag 40 auf, gegen den die dem Träger zugewandte Seite des Wirrdrahtgeleges 34 anliegt; durch Sicherungselemente 42, die auf die Enden 44 der sich durch das Wirrdrahtgelege 34 und die Kunstrasenbahn 32 hindurchgesteckten Vorsprünge 38 aufgeschoben sind, wird die doppelschichtige, durch Wirrdrahtgelege 34 und Kunstrasenbahn 32 gebildete Einlaßschicht in dieser Position gehalten, wobei zwischen der dem Träger 36 zugewandten Seite des Wirrdrahtgeleges und dem Träger 36 ein Hohlraum 46 gebildet wird.

Zusätzlich zu den sowohl als Distanzhalter als auch als Befestigungselemente dienenden Vorsprüngen 38 sind weitere Vorsprünge 48 vorgesehen, die nur Abstandshalterfunktion haben und gegen die das Wirrdrahtgelege anliegt. Bei einer anderen nicht dargestellten Variante haben die Vorsprünge kegelförmige Gestalt, so daß die Kegelspitze in die Einlaßschicht eindringt und den Vorsprüngen daher nicht ausschließlich Distanzhalterfunktion zukommt, sondern sie auch dazu beitragen, die Einlaßschicht bezüglich des Trägers 36 zu positionieren. Anstelle der zweischichtigen, durch die Kunstrasenbahn 32 und das Wirrdrahtgelege 34 gebildeten Einlaßschicht könnte auch eine durch nur eine einzige flexible Materialbahn gebildete Einlaßschicht verwendet werden.

Die in der Fig. 3 dargestellte Draufsicht auf den plattenförmigen Träger 36 des vorstehenden Ausführungsbeispiels läßt die Anordnung der Vorsprünge 38 und 48 erkennen, sowie rautenförmige Öffnungen 50 in der den Träger 36 bildenden Kunststoffplatte 51, welche dieser eine erhöhte Biegbarkeit verleihen und es ermöglichen, den Hohlraum 46 mittels eines Wasserstrahls oder dergleichen zu reinigen, wenn die Spritzschutzvorrichtung von dem Kraftfahrzeug abgenommen ist.

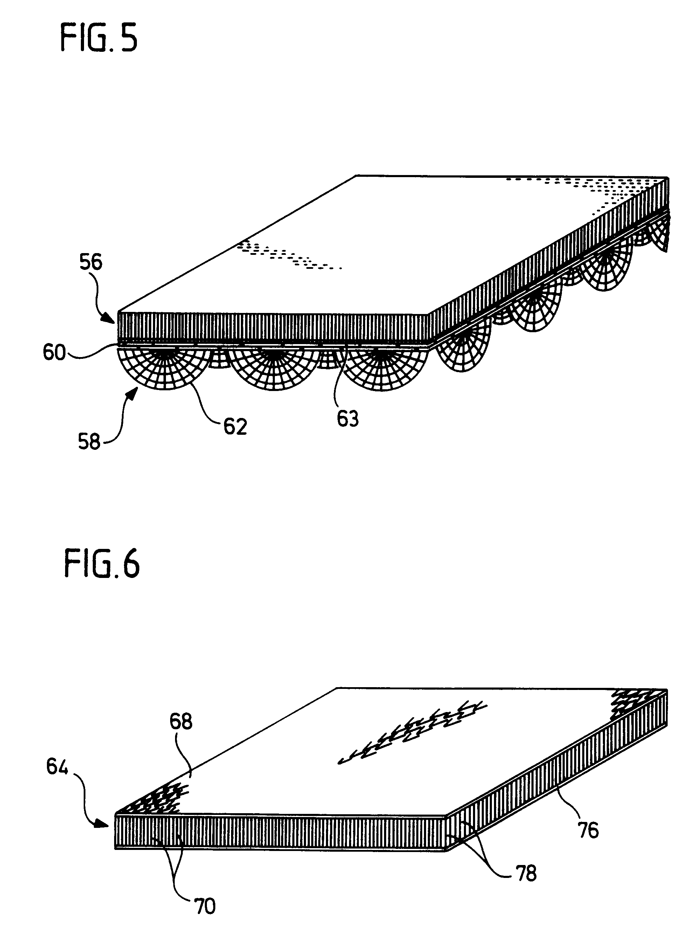

Die in der Fig. 4 dargestellte Ausführungsform der erfindungsgemäßen Spritzschutzvorrichtung besteht aus einem die Einlaßschicht der Spritzschutzvorrichtung bildenden Vlies 52, an dessen von den Fahrzeugrädern abgewandten Seite im wesentlichen kegelförmige, Distanzhalter bildende Vorsprünge 54 angeformt sind. Diese Ausführungsform ist besonders kostengünstig herstellbar und aufgrund ihrer guten Flexibilität an jegliche Kotflügelformen anpaßbar, ohne aufwendige Konfektionsarbeiten zu erfordern. Durch die strukturierte Oberfläche des Vlieses wird die kinetische Energie des auftreffenden Wassers aufgenommen, die festen Bestandteile werden abgefiltert und durch das Vlies 52 hindurch getretenes Wasser kann in dem durch die Vorsprünge 54 gebildeten Hohlraum zwischen dem Vlies 52 und einem nicht dargestellten Träger oder Kotflügel abfließen.

Eine besonders robuste und dennoch sehr flexible Ausführungsform der Spritzschutzvorrichtung ist in Fig. 5 dargestellt, sie weist wiederum als Einlaßschicht eine gewirkte wasserdurchlässige Polware 56 und eine Distanzhalterschicht 58 aus zwei Doppellagen 60 und 62 eines Kunststoff-Gitters auf, wobei die erste Lage 60 aus zwei aneinanderliegenden, im wesentlichen ebenen Drahtgittern gebildet ist und die zweite Lage 62 aus zwei gleichfalls aneinanderliegenden Drahtgittern besteht, die jedoch einer dreidimensionalen Hügelstruktur entsprechend verformt sind. Die beiden Lagen 60 und 62 sind miteinander und mit der Rückseite 63 der gewirkten Polware 56 verschweißt.

In Fig. 6 ist eine aus einer Raschelware 64 bestehende Spritzschutzvorrichtung dargestellt; ihre gewirkte und wasserdurchlässige Oberware 68, die die Einlaßschicht der Spritzschutzvorrichtung bildet, ist durch hinreichend steife und Distanzhalter bildende Verbindungsstege 70 von ihrer die zweite Seite oder eine Trägerschicht der Spritzschutzvorrichtung bildende, gleichfalls gewirkte Unterware 76 beabstandet, wodurch ein Hohlraum 78 gebildet wird.

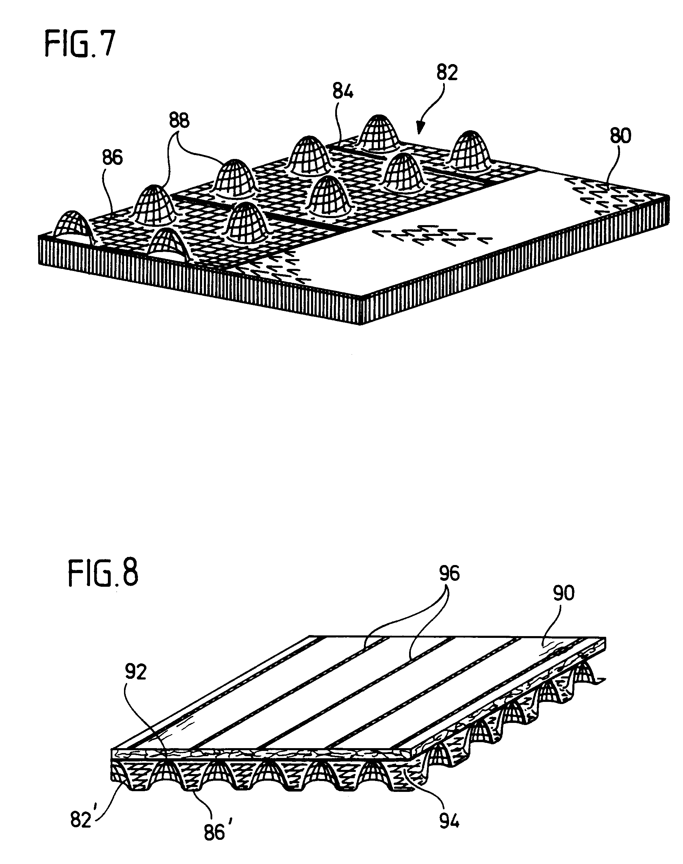

Die in Fig. 7 dargestellte Ausführungsform der erfindungsgemäßen Spritzschutzvorrichtung umfaßt als Einlaßschicht wiederum eine wasserdurchlässige, gewirkte Polware 80 in Form einer Kunstrasenbahn, an deren von der Sichtseite abgewandten Seite eine Wasserdurchtrittsöffnungen aufweisende imprägnierte, gewirkte Materialbahn 82 mittels Nähten 84 befestigt ist, welch letztere zuvor derart verformt wurde, daß von der Ebene 86 der Materialbahn 82 sich erhebende Hügel 88 gebildet sind, die als Distanzhalter der Spritzschutzvorrichtung dienen.

Die in Fig. 8 dargestellte Spritzschutzvorrichtung umfaßt als Einlaßschicht ein Vlies 90 und ihre Distanzhalterschicht ist durch die gleiche wasserdurchlässige, gewirkte Materialbahn 82' gebildet wie die Distanzhalterschicht beim Ausführungsbeispiel nach Fig. 7; im Unterschied zu diesem liegt die Materialbahn 82' jedoch mit ihren Erhebungen 92 gegen die im montierten Zustand der Spritzschutzvorrichtung von den Fahrzeugrädern abgewandte Seite des Vlieses 90 an, so daß zwischen der Ebene 86' der Kunststoffbahn 82' und dem Vlies 90 ein Hohlraum 94 gebildet wird. Die Kunststoffbahn 82' und das Vlies 90 sind durch Nähte 96 miteinander verbunden.

## Patentansprüche

1. Spritzschutzvorrichtung für Kraftfahrzeuge oder Kraftfahrzeuganhänger zur Verminderung des hinter einem fahrenden Fahrzeug auftretenden, von den auf nasser Fahrbahn abrollenden Rädern erzeugten Gischts, welche die Gestalt eines flachen Gebildes mit einer dem betreffenden Fahrzeugrad zugewandten ersten und einer von diesem Rad abgekehrten zweiten Seite besitzt, wobei die erste Seite von einer Wasserdurchtrittsöffnungen (28) aufweisenden Einlaßschicht (10; 32; 52; 56; 68; 80; 90) gebildet ist, an deren von der ersten Seite abgewandten Rückseite mindestens ein Distanzhalter (16; 34; 54; 58; 70; 88; 82') zur Schaffung eines Hohlraums (30; 78; 94) aus miteinander kommunizierenden Öffnungen zwischen der Einlaßschicht (10; 32; 52; 56; 68; 80; 90) und einem Träger (36) für den Distanzhalter (16; 34; 54; 58; 70; 88; 82') und die Einlaßschicht (10; 32; 52; 56; 68; 80; 90) vorgesehen ist, **dadurch gekennzeichnet**, daß die Einlaßschicht (10; 32; 52; 56; 68; 80; 90) von einer als Schmutzfilter- und Wassertröpfchen abbremsenden Schicht gestalteten, in beliebiger Richtung flexiblen textilen Materialbahn (10; 32; 52; 56; 68; 80; 90) gebildet ist, welche ein Gewebe, Gewirke (10; 32; 56; 68; 80), Gestrick oder Vlies (52; 90) aufweist.

2. Spritzschutzvorrichtung nach Anspruch 1, dadurch gekennzeichnet, daß die Materialbahn (10; 32; 56; 68; 80) nach vorn abstehende längliche Vorsprünge (24) aufweist.

3. Spritzschutzvorrichtung nach Anspruch 2, dadurch gekennzeichnet, daß die länglichen Vorsprünge (24) Kunststoffbändchen sind.

4. Spritzschutzvorrichtung nach Anspruch 2 oder 3, dadurch gekennzeichnet, daß die Materialbahn eine Polware (10; 32; 56; 80) ist.

5. Spritzschutzvorrichtung nach Anspruch 4, dadurch gekennzeichnet, daß die Polware eine Tufting-Ware ist.

6. Spritzschutzvorrichtung nach Anspruch 4, dadurch gekennzeichnet, daß der Pol (26) durch eine textile Bindung in der Materialbahn (10; 32; 56; 80) verankert ist.

7. Spritzschutzvorrichtung nach Anspruch 4, dadurch gekennzeichnet, daß die Polware (10; 32; 56; 80) eine Raschelware ist.

8. Spritzschutzvorrichtung nach einem oder mehreren der vorstehenden Ansprüche, dadurch gekennzeichnet, daß der Distanzhalter (16; 34; 54; 58; 70; 88; 82') an der Materialbahn (10; 32; 52; 56; 68; 80; 90) befestigt ist.

9. Spritzschutzvorrichtung nach Anspruch 8, dadurch gekennzeichnet, daß die Materialbahn (52; 56; 80) nach hinten abstehende und Distanzhalter bildende Vorsprünge (54; 62; 88) aufweist.

10. Spritzschutzvorrichtung nach Anspruch 9, dadurch gekennzeichnet, daß die Vorsprünge (54) an die Rückseite der Materialbahn (52) angeformt sind.

11. Spritzschutzvorrichtung nach einem oder mehreren der vorstehenden Ansprüche, dadurch gekennzeichnet, daß sie eine zweite, den Träger bildende Materialbahn (36; 76) aufweist, welche ebenso wie die die Einlaßschicht bildende erste Materialbahn (32; 68) flexibel ausgebildet und mit dieser so verbunden ist, daß die beiden Materialbahnen und der Distanzhalter (34; 70) ein flaches flexibles Sandwichgebilde bilden.

12. Spritzschutzvorrichtung nach Anspruch 11, dadurch gekennzeichnet, daß sie ein zweiflächiges Gewirke (64) ist.

13. Spritzschutzvorrichtung nach einem oder mehreren der Ansprüche 1 - 8, dadurch gekennzeichnet, daß der Distanzhalter von einer flexiblen, mit Öffnungen versehenen Schicht (18; 34; 58; 82; 82') gebildet ist, und daß die Öffnungen miteinander kommunizieren, so daß das durch die erste Materialbahn eindringende Wasser durch die Schicht hindurch und/oder in der Schicht ableitbar ist.

14. Spritzschutzvorrichtung nach Anspruch 13, dadurch gekennzeichnet, daß die Distanzhalterschicht von einem Wirrdrahtgelege (18; 34) gebildet ist.

15. Spritzschutzvorrichtung nach Anspruch 13 oder 14, dadurch gekennzeichnet, daß die Distanzhalterschicht (58) eine erste Lage (60) in Form eines im wesentlichen ebenen Drahtgitters und eine zweite Lage (62) in Form eines zweiten eine dreidimensionale Hügelstruktur bildenden Drahtgitters umfaßt.

16. Spritzschutzvorrichtung nach Anspruch 15, dadurch gekennzeichnet, daß die beiden Lagen (60, 62) miteinander verschweißt sind.

17. Spritzschutzvorrichtung nach Anspruch 15 oder 16, dadurch gekennzeichnet, daß zumindest eine der beiden Lagen (60, 62) durch zwei aneinanderliegende Drahtgitter gebildet ist.

18. Spritzschutzvorrichtung nach Anspruch 13, dadurch gekennzeichnet, daß die Distanzhalterschicht (82; 82') von einer entsprechend einer dreidimensionalen Hügelstruktur verformten Kunststoffbahn gebildet ist.

19. Spritzschutzvorrichtung nach Anspruch 18, dadurch gekennzeichnet, daß die Kunststoffbahn (82') an ihren Erhebungen (92) mit der die Einlaßschicht der Spritzschutzvorrichtung bildenden Materialbahn (90) verbunden ist.

20. Spritzschutzvorrichtung nach Anspruch 18, dadurch gekennzeichnet, daß die Kunststoffbahn (82) im Bereich ihrer Täler (86) mit der Materialbahn (80) verbunden ist.

21. Spritzschutzvorrichtung nach einem oder mehreren der vorstehenden Ansprüche, dadurch gekennzeichnet, daß die Materialbahn (10; 32; 80; 90) und der Distanzhalter (16; 34; 82; 82') mechanisch miteinander verbunden sind.

22. Spritzschutzvorrichtung nach Anspruch 21, dadurch gekennzeichnet, daß die Materialbahn (10; 80; 90) und der Distanzhalter (16; 82; 82') durch Nähte (20; 84; 96) miteinander verbunden sind.

23. Spritzschutzvorrichtung nach einem oder mehreren der Ansprüche 1 - 20, dadurch gekennzeichnet, daß die Materialbahn (56) und der Distanzhalter (58) miteinander verschweißt sind.

24. Spritzschutzvorrichtung nach einem oder mehreren der vorstehenden Ansprüche sowie Anspruch 11, dadurch gekennzeichnet, daß die zweite Materialbahn eine flexible Kunststoffplatte (36) ist.

25. Spritzschutzvorrichtung nach einem oder mehreren der vorstehenden Ansprüche, dadurch gekennzeichnet, daß der Distanzhalter (34; 70) an dem Träger (36; 76) befestigt ist.

26. Spritzschutzvorrichtung nach Anspruch 25, dadurch gekennzeichnet, daß der Träger (36) nach vorn abstehende und Distanzhalter bildende Vorsprünge (38) aufweist.

27. Spritzschutzvorrichtung nach Anspruch 25, dadurch gekennzeichnet, daß die Vorsprünge (38) an den Träger (36) angespritzt sind.

28. Spritzschutzvorrichtung nach Anspruch 26 oder 27, dadurch gekennzeichnet, daß zumindest ein Teil der Vorsprünge (38) zugleich Befestigungselemente für die die Einlaßschicht bildende Materialbahn (32) sind.

29. Spritzschutzvorrichtung nach einem oder mehreren der vorstehenden Ansprüche, dadurch gekennzeichnet, daß der Distanzhalter (16; 34; 54; 58; 70; 88; 82') - in Richtung senkrecht zu der die erste Seite bildenden Materialbahn (14; 32; 52; 56; 68; 80; 90) gemessen - eine Höhe von mindestens 5 mm hat.

30. Spritzschutzvorrichtung nach Anspruch 29, dadurch gekennzeichnet, daß der Distanzhalter (16; 34; 54; 58; 70; 88; 82') eine Höhe von mindestens 6 mm hat.

31. Spritzschutzvorrichtung nach Anspruch 30, dadurch gekennzeichnet, daß der Distanzhalter (16; 34; 54; 58; 70; 88; 82') eine Höhe von 6 - 8 mm hat.

32. Spritzschutzvorrichtung nach Anspruch 30, dadurch gekennzeichnet, daß der Distanzhalter (16; 34; 54; 58; 70; 88; 82') eine Höhe von höchstens 20 mm hat.

33. Spritzschutzvorrichtung nach einem oder mehreren der vorstehenden Ansprüche, dadurch gekennzeichnet, daß die Sichtseite bildende Warenbahn (14; 32; 52; 56; 68; 80; 90) eine freie Durchgangsfläche von mindestens 5 % hat.

## Claims

1. Spray protection device for vehicles or vehicle trailers for reducing the spray occurring behind a travelling vehicle and produced by the wheels running on wet roads, said spray protection device having the form of a flat structure with a first side facing the relevant vehicle wheel and a second side facing away from this wheel, wherein the first side is formed by an inlet layer (10; 32; 52; 56; 68; 80; 90) having water passage openings (28), at least one spacer (16; 34; 54; 58; 70; 88; 82') being provided at the back of said inlet layer facing away from the first side for creating a cavity (30; 78; 94) between the inlet layer (10; 32; 52; 56; 68; 80; 90) and a carrier (36) for the spacer (16; 34; 54; 58; 70; 88; 82') and the inlet layer (10; 32; 52; 56; 68; 80; 90), said cavity being formed by openings communicating with one another,
**characterized in that** the inlet layer (10; 32; 52; 56; 68; 80; 90) is formed from a textile material web (10; 32; 52; 56; 68; 80; 90) flexible in any direction and formed as a dirt filter and water droplet retarding layer, said material web having a woven fabric, weft-knitted fabric (10; 32; 56; 68; 80), knitted fabric or fleece (52; 90).

2. Spray protection device as defined in claim 1, characterized in that the material web (10; 32; 56; 68; 80) has elongated projections (24) protruding towards the front.

3. Spray protection device as defined in claim 2, characterized in that the elongated projections (24) are plastic ribbons.

4. Spray protection device as defined in claim 2 or 3, characterized in that the material web is a pile fabric (10; 32; 56; 80).

5. Spray protection device as defined in claim 4, characterized in that the pile fabric is a tufted fabric.

6. Spray protection device as defined in claim 4, characterized in that the pile (26) is anchored in the material web (10; 32; 56; 80) by a textile binding.

7. Spray protection device as defined in claim 4, characterized in that the pile fabric (10; 32; 56; 80) is a Raschel fabric.

8. Spray protection device as defined in one or several of the preceding claims, characterized in that the spacer (16; 34; 54; 58; 70; 88; 82') is attached to the material web (10; 32; 52; 56; 68; 80; 90).

9. Spray protection device as defined in claim 8, characterized in that the material web (52; 56; 80) has projections (54, 62; 88) protruding towards the back and forming spacers.

10. Spray protection device as defined in claim 9, characterized in that the projections (54) are integrally formed on the back of the material web (52).

11. Spray protection device as defined in one or several of the preceding claims, characterized in that it has a second material web (36; 76) forming the carrier, said second material web being designed to be just as flexible as the first material web (32; 68) forming the inlet layer and being connected to this first material web such that the two material webs and the spacer (34; 70) form a flat, flexible sandwich structure.

12. Spray protection device as defined in claim 11, characterized in that it is a double-layered weft-knitted fabric (64).

13. Spray protection device as defined in one or several of claims 1 - 8, characterized in that the spacer is formed from a flexible layer (18; 34; 58; 82; 82') provided with openings, and that the openings communicate with one another such that the water penetrating through the first material web is drainable through the layer and/or in the layer.

14. Spray protection device as defined in claim 13, characterized in that the spacer layer is formed from an irregular wire structure (17; 34).

15. Spray protection device as defined in claim 13 or 14, characterized in that the spacer layer (58) comprises a first layer (60) in the form of an essentially plane wire mesh and a second layer (62) in the form of a second wire mesh forming a three-dimensional hilly structure.

16. Spray protection device as defined in claim 15, characterized in that the two layers (60, 62) are welded together.

17. Spray protection device as defined in claim 15 or 16, characterized in that at least one of the two layers (60, 62) is formed by two wire meshes abutting on one another.

18. Spray protection device as defined in claim 13, characterized in that the spacer layer (82; 82') is formed from a plastics web shaped in accordance with a three-dimensional hilly structure.

19. Spray protection device as defined in claim 18, characterized in that the plastics web (82') is connected at its elevations (92) with the material web (90) forming the inlet layer of the spray protection device.

20. Spray protection device as defined in claim 18, characterized in that the plastics web (82) is connected with the material web (80) in the region of its valleys (86).

21. Spray protection device as defined in one or several of the preceding claims, characterized in that the material web (10; 32; 80; 90) and the spacer (16; 34; 82; 82') are mechanically connected with one another.

22. Spray protection device as defined in claim 21, characterized in that the material web (10; 80; 90) and the spacer (16; 82; 82') are connected with one another by seams (20; 84; 96).

23. Spray protection device as defined in one or several of claims 1 - 20, characterized in that the material web (56) and the spacer (58) are welded to one another.

24. Spray protection device as defined in one or several of the preceding claims as well as claim 11, characterized in that the second material web is a flexible plastics sheet (36).

25. Spray protection device as defined in one or several of the preceding claims, characterized in that the spacer (34; 70) is attached to the carrier (36; 76).

26. Spray protection device as defined in claim 25, characterized in that the carrier (36) has projections (38) protruding towards the front and forming spacers.

27. Spray protection device as defined in claim 25, characterized in that the projections (38) are injection-molded to the carrier (36).

28. Spray protection device as defined in claim 26 or 27, characterized in that at least a portion of the projections (38) are, at the same time, attachment elements for the material web (32) forming the inlet layer.

29. Spray protection device as defined in one or several of the preceding claims, characterized in that the spacer (16; 34; 54; 58; 70; 88; 82') - measured in the direction vertically to the material web (14; 32; 52; 56; 68; 80; 90) forming the first side - has a height of at least 5 mm.

30. Spray protection device as defined in claim 29, characterized in that the spacer (16; 34; 54; 58; 70: 88; 82') has a height of at least 6 mm.

31. Spray protection device as defined in claim 30, characterized in that the spacer (16; 34; 54; 58; 70; 88; 82') has a height of 6 - 8 mm.

32. Spray protection device as defined in claim 30, characterized in that the spacer (16; 34; 54; 58; 70; 88; 82') has a height of 20 mm at the most.

33. Spray protection device as defined in one or several of the preceding claims, characterized in that the material web (14; 32; 52; 56; 68; 80; 90) forming the visible side has an open passage area of at least 5 %.

## Revendications

1. Dispositif anti-projections pour des véhicules automobiles, ou pour des remorques de véhicules automobiles, pour réduire le brouillard qui apparaît derrière un véhicule en circulation et qui est produit par les roues qui roulent sur la chaussée mouillée, ledit dispositif ayant la forme d'une structure plane avec un premier côté orienté vers la roue concernée du véhicule et un second côté détourné de cette roue, le premier côté étant formé par une couche de pénétration (10 ; 32 ; 52 ; 56 ; 68 ; 80 ; 90) qui comporte des ouvertures de traversée (28) pour l'eau, avec au moins un élément écarteur (16 ; 34 ; 54 ; 58 ; 70 ; 88 ; 82') prévu sur le côté arrière détourné du premier côté de la couche de pénétration pour réaliser une cavité (30 ; 78 ; 94) formée d'ouvertures qui communiquent les unes avec les autres entre la couche de pénétration (10 ; 32 ; 52 ; 56 ; 68 ; 80 ; 90) et un support (36) pour l'élément écarteur (16 ; 34 ; 54 ; 58 ; 70 ; 88 ; 82') et pour la couche de pénétration (10 ; 32 ; 52 ; 56 ; 68 ; 80 ; 90), caractérisé en ce que la couche de pénétration (10 ; 32 ; 52 ; 56 ; 68 ; 80 ; 90) est formée par une bande de matériau textile flexible en direction quelconque (10 ; 32 ; 52 ; 56 ; 68 ; 80 ; 90) conçue en tant que couche filtrante pour les saletés et tant que couche qui freine les gouttelettes d'eau, cette bande de matériau comprenant un tissu avec ou sans mailles, un tricot (10 ; 32 ; 52 ; 56 ; 68; 80 ; 90) ou une nappe non tissée (52 ; 90).

2. Dispositif anti-projections selon la revendication 1, caractérisé en ce que la bande de matériau (10 ; 32 ; 56 ; 68 ; 80) comporte des saillies allongées (24) qui dépassent vers l'avant.

3. Dispositif anti-projections selon la revendication 2, caractérisé en ce que les saillies allongées (24) sont des bandelettes de matière plastique.

4. Dispositif anti-projections selon l'une ou l'autre des revendications 2 et 3, caractérisé en ce que la bande de matériau est un tissu polaire (10 ; 32 ; 56 ; 80).

5. Dispositif anti-projections selon la revendication 4, caractérisé en ce que le tissu polaire est un tissu de tufting.

6. Dispositif anti-projections selon la revendication 4, caractérisé en ce que les doigts (26) du tissu polaire sont ancrés dans la bande de matériau (10 ; 32 ; 56 ; 80) au moyen d'une jonction textile.

7. Dispositif anti-projections selon la revendication 4, caractérisé en ce que le tissu polaire (10 ; 32 ; 56 ; 80) est un tissu à mailles de Raschel.

8. Dispositif anti-projections selon l'une ou plusieurs des revendications précédentes, caractérisé en ce que l'élément écarteur (16 ; 34 ; 54 ; 58 ; 70 ; 88 ; 82') est fixé sur la bande de matériau (10 ; 32 ; 56 ; 68 ; 80 ; 90).

9. Dispositif anti-projections selon la revendication 8, caractérisé en ce que la bande de matériau (52 ; 56 ; 80) comporte des saillies (52 ; 54 ; 62 ; 88) qui dépassent vers l'arrière et qui forment des éléments écarteurs.

10. Dispositif anti-projections selon la revendication 9, caractérisé en ce que les saillies (54) sont formées sur la face arrière de la bande de matériau (52).

11. Dispositif anti-projections selon l'une ou plusieurs des revendications précédentes, caractérisé en ce qu'il comporte une seconde bande de matériau (36 ; 76) qui forme le support, cette seconde bande de matériau étant réalisée flexible tout comme la première bande de matériau (32 ; 68) qui forme la couche de pénétration, et étant reliée à cette dernière de telle manière que les deux bandes de matériau et les éléments écarteurs (34 ; 70) forment une structure sandwich plane flexible.

12. Dispositif anti-projections selon la revendication 11, caractérisé en ce qu'il est un tricot à deux couches (64).

13. Dispositif anti-projections selon l'une ou plusieurs des revendications 1 à 8, caractérisé en ce que l'élément écarteur est formé par une couche flexible (18 ; 34 ; 58 ; 82 ; 82') pourvue d'ouvertures, et en ce que les ouvertures communiquent les unes avec les autres, de sorte que l'eau qui pénètre à travers la première bande de matériau peut être évacuée en traversant la couche et/ou à l'intérieur de la couche.

14. Dispositif anti-projections selon la revendication 13, caractérisé en ce que la couche d'écartement est formée par une couche de fils emmêlés (18 ; 34).

15. Dispositif anti-projections selon l'une ou l'autre des revendications 13 et 14, caractérisé en ce que la couche d'écartement (58) comprend une première couche (60) sous la forme d'un grillage de fil sensiblement plan et une seconde couche (62) sous la forme d'un second grillage de fil qui forme une structure vallonnée tridimensionnelle.

16. Dispositif anti-projections selon la revendication 15, caractérisé en ce que les deux couches (60, 62) sont soudées l'une à l'autre.

17. Dispositif anti-projections selon l'une ou l'autre des revendications 15 et 16, caractérisé en ce que l'une au moins des deux couches (60, 62) est formée par deux grillages de fils posés l'un sur l'autre.

18. Dispositif anti-projections selon la revendication 13, caractérisé en ce que la couche d'écartement (82 ; 82') est formée par une bande de matière plastique déformée conformément à une structure vallonnée tridimensionnelle.

19. Dispositif anti-projections selon la revendication 19, caractérisé en ce que la bande de matière plastique (82') est reliée au niveau de ses bosses (92) à la bande de matériau (90) qui forme la couche de pénétration du dispositif anti-projections.

20. Dispositif anti-projections selon la revendication 18, caractérisé en ce que la bande de matière plastique (82) est reliée dans la région de ses creux (86) à la bande de matériau (80).

21. Dispositif anti-projections selon l'une ou plusieurs des revendications précédentes, caractérisé en ce que la bande de matériau (10 ; 32 ; 80 ; 90) et les éléments écarteurs (16 ; 34 ; 82 ; 82') sont reliés ensemble par voie mécanique.

22. Dispositif anti-projections selon la revendication 21, caractérisé en ce que la bande de matériau (10 ; 80 ; 90) et les éléments écarteurs (16 ; 82 ; 82') sont reliés ensemble par des coutures (20 ; 84 ; 96).

23. Dispositif anti-projections selon l'une ou plusieurs des revendications 1 à 20, caractérisé en ce que la bande de matériau (56) et l'élément écarteur (58) sont soudés l'un à l'autre.

24. Dispositif anti-projections selon l'une ou plusieurs des revendications précédentes, ainsi que la revendication 11, caractérisé en ce que la seconde bande de matériau est une plaque flexible en matière plastique (36).

25. Dispositif anti-projections selon l'une ou plusieurs des revendications précédentes, caractérisé en ce que l'élément écarteur (34 ; 70) est fixé au support (36 ; 76).

26. Dispositif anti-projections selon la revendication 25, caractérisé en ce que le support (36) comporte des saillies (38) dépassant vers l'avant et formant des éléments écarteurs.

27. Dispositif antiprojections selon la revendication 25, caractérisé en ce que les saillies (38) sont réalisées par projection sur le support (36).

28. Dispositif anti-projections selon l'une ou l'autre des revendications 26 et 27, caractérisé en ce qu'au moins une partie des saillies (38) sont simultanément des éléments de fixation pour la bande de matériau (32) qui forme la couche de pénétration.

29. Dispositif anti-projections selon l'une ou plusieurs des revendications précédentes, caractérisé en ce que l'élément écarteur (16 ; 34 ; 54 ; 58 ; 70 ; 88 ; 82') a une hauteur d'au moins 5 mm, mesurée en direction perpendiculaire à la bande de matériau (14 ; 32 , 52 ; 56 ; 68 ; 80 ; 90) qui forme la première face.

30. Dispositif anti-projections selon la revendication 29, caractérisé en ce que l'élément écarteur (16 ; 34 ; 54 ; 58 ; 70 ; 88 ; 82') a une hauteur d'au moins 6 mm.

31. Dispositif anti-projections selon la revendication 30, caractérisé en ce que l'élément écarteur (16 ; 34 ; 54 ; 58 ; 70 ; 88 ; 82') a une hauteur de 6 à 8 mm.

32. Dispositif anti-projections selon la revendication 30, caractérisé en ce que l'élément écarteur (16 ; 34 ; 54 ; 58 ; 70 ; 88 ; 82') a une hauteur maximum de 20 mm.

33. Dispositif anti-projections selon l'une ou plusieurs des revendications précédentes, caractérisé en ce que la bande textile qui forme le côté visible (14 ; 32 ; 52 ; 56 ; 68 ; 80 ; 90) a une surface de traversée libre d'au moins 5%.
